# EUROPEAN PATENT SPECIFICATION

(11) **EP 3 225 595 B1**
(45) Date of publication and mention of the grant of the patent: **01.05.2019**
(21) Application number: 15863628.2
(22) Date of filing: 26.11.2015
(51) Int. Cl.: C02F 1/44, B01D 61/04, B01D 61/12, B01D 61/58, B01D 65/08, B01D 71/56, C02F 1/70, C02F 1/76, C02F 5/08, C02F 5/14, C02F 101/20, C02F 101/22, C02F 103/00, C02F 103/06, C02F 103/08

(54) **WATER PRODUCTION METHOD**
WASSERHERSTELLUNGSVERFAHREN
PROCÉDÉ DE PRODUCTION D'EAU

(30) Priority: 27.11.2014 JP 2014239763
(43) Date of publication of application: 04.10.2017
(73) Proprietor: Toray Industries, Inc., Tokyo 103-8666 (JP)
(72) Inventor: TANIGUCHI Masahide, Otsu-shi Shiga 520-8558 (JP); LAGREF Jean-Jacques, 57400 Sarrebourg (FR); KALLENBERG Klaus, 8808 Pfaffikon (CH)
(74) Representative: Hoefer & Partner Patentanwälte mbB
(86) International application number: PCT/JP2015/083253
(87) International publication number: WO 2016/084905

(56) References cited:
- WO-A1-2012/144384
- JP-A- H02 115 027
- JP-A- 2007 152 265
- JP-A- 2008 296 188
- JP-A- 2010 201 313
- JP-A- 2012 200 696
- JP-A- 2012 213 686

## Description

### TECHNICAL FIELD

The present invention relates to a fresh water generation method for obtaining permeate having a low concentration from raw water, such as seawater, and salt-containing river water, groundwater, lake water and wastewater-treated water, using a semipermeable membrane module, and more specifically, relates to a fresh water generation method for obtaining fresh water stably at low cost while inhibiting the semipermeable membrane module from suffering oxidative degradation.

### BACKGROUND ART

In recent years, shortages of water resources have becoming more serious, and exploitation of hitherto unutilized water resources has been studied. Among these studies, particular attention has been focused on the so-called seawater desalination, namely technologies for producing drinking water from seawater which, though most familiar to beings, has been unable to use without being treated, and further reuse technologies of purifying sewage or wastewater and converting the thus-treated wastewater into fresh water. The seawater desalination has so far been brought into actual use with a particular emphasis on thermal processes in the Middle East region which is extremely poor in water resources and very rich in thermal resources attributable to petroleum, while seawater desalination using reverse osmosis technology which is high in energy efficiency has been adopted in heat source-poor regions other than the Middle East region. Recent advances of reverse osmosis technology have been pushing ahead with improvement in reliability and reduction in cost, and construction of seawater desalination plants adopting reverse osmosis technology has therefore been proceeding in many regions, inclusive of the Middle East region, and is now showing an aspect of international diversification. Reuse of sewage or wastewater is beginning to be applied to districts devoid of fresh water sources, such as urban areas and industrial regions in inlands or along coasts, and regions in which discharge amount is limited because of severe effluent regulation. In island countries poor in water resources, notably Singapore, after treatment of sewage water generated within the country, the treated water is kept in reservoirs without being discharged into sea and regenerated to a level of drinkable water through the use of reverse osmosis membranes. In this way, water shortage has been addressed.

The reverse osmosis technology having been applied to desalination of seawater and reuse of sewage or wastewater allows production of desalinated water by applying pressure higher than osmosis pressure to water containing solutes such as salts, and forcing the water to pass through semipermeable membranes. This technology makes it possible to obtain drinking water from seawater, brackish water and water which contains harmful contaminants, and has been used for production of industrial ultrapure water, wastewater treatment, recovery of valuables and so on.

Stable operations of a desalination plant utilizing reverse osmosis membranes require pretreatment appropriate to water quality of raw water taken in the plant. Insufficient pretreatment results in degradation of reverse osmosis membranes or growth of fouling (contaminations on the surface or inside of reverse osmosis membrane), whereby stable operations tend to become difficult. In specific cases where chemical substances as a potential cause of degradation of reverse osmosis membranes penetrate into reverse osmosis membranes, there is a concern that the reverse osmosis membranes may fall into a fatal situation that they cannot be restored even by cleaning. More specifically, such chemical substances may decompose the functional layers of the reverse osmosis membranes (portions developing their reverse osmosis functions) to result in lowering of capabilities of the membranes to separate water and solutes.

On the other hand, even if sufficient pretreatment is carried out, it will be not easy to inhibit pipe lines from being fouled. To be more specific, there are two problems, if categorized broadly.

A first problem consists in biofouling. The biofouling is a phenomenon that biofilms develop possibly everywhere from the interior of intake pipe lines to the interior of reverse osmosis modules by long-term operations, thereby causing obstruction to stable operations. For this reason, it has been common practice to dose a cheap oxidant such as hypochlorous acid, continuously or intermittently in order to retard formation of biofilms (see Non-Patent Document 1). However, such an oxidant tends to cause damage to the functional layers of reverse osmosis membranes (a second problem). In particular, reverse osmosis membranes including polyamide which is the mainstream of reverse osmosis membranes, is susceptible to oxidative degradation (see Non-Patent Document 2). Therefore, inhibition of biofilm formation using an oxidant is brought to an end before the treatment with reverse osmosis membranes, and the oxidant is neutralized with a reductant so that, as described in Non-Patent Document 3, the oxidation-reduction potential of feed water of reverse osmosis membranes is maintained to 350 mV or lower, whereby the reverse osmosis membranes are protected against damage. Incidentally, the reverse osmosis membranes are cleaned separately with a bactericide exerting no detrimental effect on the reverse osmosis membranes.

However, it has been reported (in Non-Patent Document 4) that, in cases where transition metals are contained in feed water (pretreated water) of reverse osmosis membranes even when sufficient neutralization with a reductant is performed before the treatment with reverse osmosis membranes, the transition metals develop their catalytic action and produce oxidized substances in the interior of the reverse osmosis membranes, thereby causing oxidative degradation of the reverse osmosis membranes. For the purpose of preventing such oxidative degradation, it is required to use transition metal-free raw water or remove transition metals thoroughly from the raw water. While transition metal concentrations in seawater are very low and cause no problems in many cases, possibility of presence of transition metals in sewage wastewater is high as a matter of course. There may also be cases where even seawater contains vein- or groundwater-originated transition metals, and it goes without saying that caution must be taken to avoid contamination of pretreated water with transition metals; still, there may be cases where pipe lines, pretreating members (e.g. sand filter media) and flocculants contain transition metals as impurities. Therefore, it is difficult to completely prevent transition metals from penetrating into reverse osmosis membranes. As a method for preventing the oxidative degradation, dosage of a reductant in an excessive amount has generally been carried out. However, it has been reported (see Non-Patent Document 5) that the dosage of a reductant in an excessive amount was apt to generate biofouling through the use of the reductant as a feed for microorganisms. As a result, the use of a cleaning agent in large amount becomes necessary for stable operations. In other words, adoption of such a method leads to difficulty in stable operations or increase in operation costs. As countermeasures, there have been made a proposal to prevent an oxidized state from developing in the interior of reverse osmosis membranes by restricting the dosing amount of a reductant while monitoring the oxidation-reduction potential of a concentrate of reverse osmosis membranes (see Patent Document 1) and a proposal to inhibit biofouling by using an organic or phosphorus-based reductant (see Patent Document 2). However, the oxidation-reduction potential of the concentrate is not so high in sensitivity, and hence it is not easy to totally protect reverse osmosis membranes only by monitoring the oxidation-reduction potential. Above all, mere monitor of condensate makes it possible to detect an abnormal condition only after the interior of reverse osmosis membranes has fallen in an oxidized state, and therefore the reverse osmosis membranes have a time for which they are in an oxidized state, though the time is short. And in terms of impossibility of protecting reverse osmosis membranes unless an excess amount of reductant is dosed, it cannot eventually be said that the use of organic or phosphorus-based reductants is superior in functionality to oxidant neutralizing agents currently in use. In addition, unless different varieties of reductants are used, the effect of inhibiting biofouling cannot be achieved. Hence both of those countermeasures still have problems with operation cost and stable operability.

### BACKGROUND ART DOCUMENT

### PATENT DOCUMENT

Patent Document 1: JP-A-09-057076
Patent Document 2: JP-A-2007-90288, claim 1, paragraph 0010
Patent Document 3: WO2012/144384 A1

### NON-PATENT DOCUMENT

Non-Patent Document 1: M. Furuichi et al., "Over-Eight-year Operation and Maintenance of 40,000 m3/day Seawater RO Plant in Japan," Proc. Of IDA World Congress, SP05-209 (2005)
Non-Patent Document 2: Uemura Tadahiro et al., "Chlorine Resistance of Reverse Osmosis Membrane and Change in Membrane Structure and Performance Caused by Chlorination Degradation," Nippon Kaisui Gakkai-shi, vol. 57, No. 3 (October, 2012)
Non-Patent Document 3: Toray Reverse Osmosis Membrane Handling Manual: Operation, Maintenance and Handling Manual for Membrane Elements (October, 2012)
Non-Patent Document 4: Yosef Ayyash et al., "Performance of reverse osmosis membrane in Jaddah Phase I plant," Desalination 96, 215-224 (1994)
Non-Patent Document 5: M. Nagai et al., "SWRO Desalination for High Salinity," Proc. of IDA World Congress, DB09-173 (2009)

### SUMMARY OF THE INVENTION

### PROBLEMS THAT THE INVENTION IS TO SOLVE

An object of the invention is to provide a fresh water generation method for obtaining permeate having a low concentration from raw water, such as seawater, and salt-containing river water, groundwater, lake water and wastewater treated water, using a semipermeable membrane module, and more specifically, to provide a fresh water generation method for obtaining fresh water stably at low cost while inhibiting the semipermeable membrane module from suffering oxidative degradation.

### MEANS FOR SOLVING THE PROBLEMS

In order to solve the problems described above, the present invention has the features specified in independent method claim 1. Optional features of the method are as specified in dependent claims 2-12.

### ADVANTAGE OF THE INVENTION

According to the present invention, it becomes possible to stably obtain fresh water by desalination of seawater, notably seawater having a high concentration such as seawater in the Middle East region, while inhibiting reverse osmosis membranes from suffering degradation and fouling.

Additionally, the present invention enables to stably obtain fresh water at low cost using raw water such as seawater, and salt-containing river water, groundwater, lake water, sewage treated water and wastewater treated water, while inhibiting contamination of semipermeable membrane device and degradation and fouling of semipermeable membrane modules.

### BRIEF DESCRIPTION OF THE DRAWINGS

Fig. 1 is a process flow diagram of one example of semipermeable membrane separation device (not according to the invention).
Fig. 2 is a process flow diagram of another example of semipermeable membrane separation device using two kinds of raw water, to which the fresh water generation method of the present invention is applicable.
Fig. 3 is a process flow diagram of still another example of semipermeable membrane separation device in which a concentrate obtained by treating a permeate again by a semipermeable membrane is refluxed to raw water, and to which the fresh water generation method of the present invention is applicable.

### MODE FOR CARRYING OUT THE INVENTION

Examples and preferred embodiments of the present invention are illustrated below by reference to the drawings. However, the scope of the invention should not be construed as being limited to these embodiments.

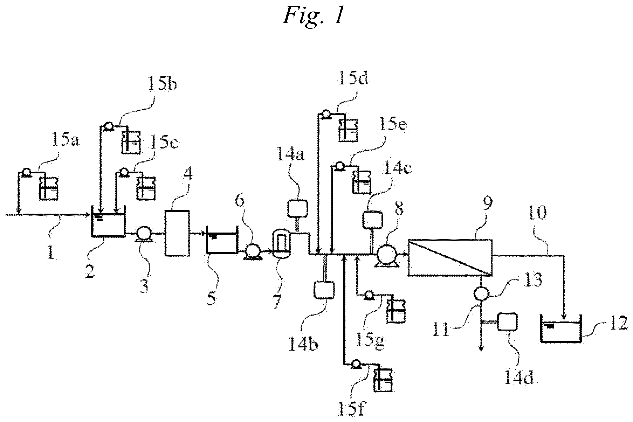

One example of a semipermeable membrane separation device to which the fresh water generation method of the present invention is applicable is shown in Fig. 1. In the semipermeable membrane separation device shown in Fig. 1, raw water is allowed to flow through a raw water line 1 and once stored in a raw water tank 2, then fed into a pretreatment unit 4 by a raw-water feed pump 3, and subjected to pretreatment. The pretreated water is made to pass through an intermediate tank 5, a pretreated water feed pump 6 and a safety filter 7, pressurized by a booster pump 8, and then separated into a permeate and a concentrate by a semipermeable membrane unit 9 including a semipermeable membrane module. The permeate is allowed to flow through a permeate line 10 and stored in a product water tank 12. The concentrate is allowed to flow through a concentrate line 11 and discharged into the outside of the system after the pressure energy thereof is recovered by an energy recovery unit 13.

A scale inhibitor having a reducing function according to the present invention is dosed intermittently or continuously e.g. through a chemical agent injection line 15g so as to maintain the oxidation-reduction potential (ORP) or the chlorine concentration to a threshold value or lower. In light of the purpose of dosing a scale inhibitor, dosage of a scale inhibitor is required all the time under conditions that the possibility of scaling is predicted from a water temperature, scale constituent concentrations, ionic strength, pH and so on, while it becomes unnecessary when there is no or slight possibility of scaling. In the latter case, it is possible to cut down the cost of dosing chemicals through the dosage of relatively low-priced reductants having no scale inhibiting function, in addition to the dosage of scale inhibitors. In order to do so, however, it becomes necessary to carry out measurements of water temperatures, scale constituent concentrations, ionic strength and pH in real time without delay, and further to determine whether the dosage of scale inhibitors is necessary or not in response to instantaneous invasion by oxidants and oxidation-inducing transition metals, and hence it may be accompanied with difficulty in operation management. Under such circumstances, while it involves expenses related to scale inhibitors, adoption of the method of dosing scale inhibitors all the time is a preferred embodiment because it allows inhibition of oxidative degradation and scaling with ease and reliability.

Oxidation-reduction electrometers (or chlorine concentration meters), though not particularly restricted as to their installing locations and the number thereof, are generally installed in a plurality of locations. As a preferred example, mention may be made of a method in which an oxidation-reduction electrometer 14a is installed and measurements are made thereby in order to determine whether the reductant dosage for oxidant neutralization through a chemical agent injection line 15d is necessary or not, and thereafter the amount of reductant to be dosed is controlled by at least one of oxidation-reduction electrometers 14b, 14c and 14d.

By adopting such a method, it becomes possible to attain an object of the present invention, namely to effectively inhibit scaling on semipermeable membrane surfaces and oxidative degradation of semipermeable membranes.

More specifically, even in cases where oxidants in raw water cannot be detected online, or equivalently, oxidation-reduction potentials are sufficiently low or halogen concentrations cannot be detected with DPD reagents, transition metals may, however, be present in raw water, piping and pretreatment environment and elution thereof may occur and incur a risk of producing oxidative substances on the surface of a semipermeable membrane. Application of the present invention to such cases allows inhibition of the oxidative degradation of semipermeable membranes.

Herein, while it is preferable that the oxidation-reduction potential to be maintained is e.g. 350 mV or lower, namely the above-specified standard value for operation management of polyamide-based reverse osmosis membranes, such a numerical value is a value specified with the intention of maintaining safety with reliability. Therefore, even in the case where the oxidation-reduction potential value is a little greater than the standard value, there is almost no problem if such a value is maintained for only a short time. Additionally, since the oxidation-reduction potential value is changed depending on the type of membranes used, it is possible to empirically choose a threshold value of the oxidation-reduction potential a little lower or greater than the standard value.

Further, since scale inhibitors are more complicated in manufacturing process than commonly-used reductants and therefore become expensive, it is preferred that, in order to minimize the usage thereof, the oxidation-reduction potential of raw water and the oxidant concentration in raw water is measured beforehand and a low-priced reductant is dosed in advance as auxiliaries when required. Specifically, according to the invention, a reductant is dosed after the dosage of a scale inhibitor. It can also be dosed before and after the dosage of a scale inhibitor. As a result of intensive studies by the present inventors, it has been found that dosage of a scale inhibitor before the dosage of a reductant in particular was very favorable because the scale inhibitor can capture transition metals in advance by its effect of preventing deposition (scaling) of transition metals to result in efficient inhibition against formation of oxidative substances under the action of transition metals and reductants. Dosage of a reductant only after dosage of a scale inhibitor is especially advantageous in terms of costs for facilities as well because it allows integration of dosing facilities into one system. Although inhibiting the formation of oxidative substances, which is the gist of the invention, is also possible as a matter of course even when a reductant is dosed only before dosage of a scale inhibitor so long as the scale inhibitor is dosed immediately after the dosage of the reductant, there arises necessity to somewhat increase an amount of the scale inhibitor to be dosed. Of course, it is all right for a reductant to be divided into two portions and dosed before and after the dosage of a scale inhibitor, respectively. As to specific conditions for the dosage of the scale inhibitor and the reductant, conditions that the oxidation-reduction potential of feed water of a semipermeable membrane module is from 100 mV to 500 mV or the residual halogen concentration thereof is from the detection limit to 0.2 mg/L, notably conditions that the oxidation-reduction potential is from 100 mV to 350 mV, are highly preferable because they allow inhibition of oxidative degradation of semipermeable membranes.

Examples of raw water suitable for the present invention include water including, as a main ingredient thereof, seawater, brackish water, river water, groundwater, wastewater or treated water thereof. Among them, water including, as the main ingredient thereof, seawater or brackish water is especially preferred. Since such waters contain high amounts of alkaline earth metals, sulfate ion and carbonate ion which carry a considerable risk of generating scale, the continuous dosage of the scale inhibitor is suitable for such waters. In particular, it is preferable that the dosage of the scale inhibitor to such waters is applied to cases where the recovery ratio (ratio of the amount of permeate to the amount of raw water) is within a range of 30% to 90%. In the case of using seawater in particular, the application at recovery ratio ranging from 45% to 60% is very preferable because pretreatment cost and energy cost can be lowered comprehensively. Herein, it is preferable that the total dissolved solids (TDS) concentration in concentrate is from 6wt% to 10wt%. Such conditions are suited for the cases of using not only seawater but also brackish water in the case where a scale inhibitor is required to be dosed thereto. In the case of the brackish water, it is preferable that the total dissolved solids (TDS) concentration in concentrate is from 0.1wt% to 1wt%.

Further, in view of prevention of oxidative degradation of reverse osmosis membranes, namely an object of the present invention, it is appropriate for the dosage of a scale inhibitor and a reductant to be applied to cases where the raw water or the pretreated water has, at least temporarily, the oxidation-reduction potential of 350 mV or higher before such water is fed into reverse osmosis membrane modules, namely, cases where feed water carries a risk of oxidative degradation of reverse osmosis membranes.

Furthermore, it is preferable that an oxidant is positively dosed to intake pipe line(s), during pretreatment, or the like. In other words, dosage of the oxidant is preferably applied to the case of performing sterilization cleaning. Specifically, it is preferable that the oxidant is dosed during water intake or pretreatment, and the reductant is dosed at a location downstream therefrom and also upstream from a semipermeable membrane module. The dosage of the reductant takes place after the dosage of the scale inhibitor.

Additionally, the present invention is particularly effective for cases in which there is a risk of contamination of transition metals into the feed water of a reverse osmosis membrane. More specifically, application of the present invention has great effect on cases where raw water or pretreated water contains transition metals in an amount of 0.001 mg/L or higher, particularly 0.01 mg/L or higher. Incidentally, examples of transition metals to which the present invention is applied appropriately, or equivalently, transition metals likely to contribute to oxidative degradation of reverse osmosis membranes, include Fe(II/III), Mn(II), Mn(III), Mn(IV), Cu(I/II), Co(II/III), Ni(II) and Cr(II/III/IV/VI).

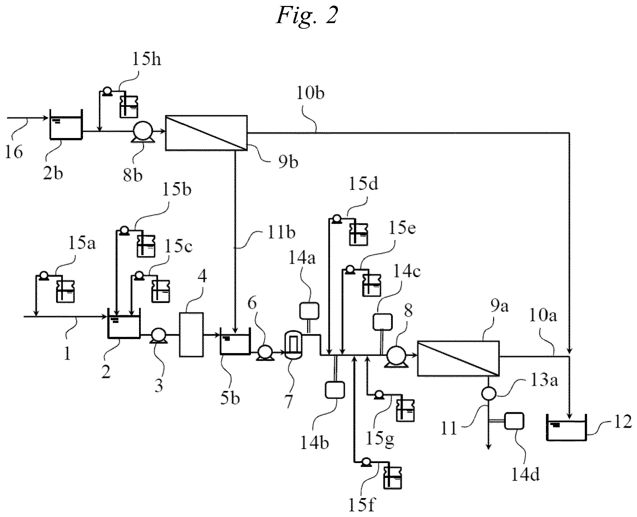

In addition, raw water suitable for the present invention is, for example, water mixed with concentrated wastewater obtained by sewage water recycle from another desalination line (a second raw water line 16, a raw water tank 2b, a booster pump 8b, a semipermeable membrane unit 9b, a permeate line 10b, and a concentrate line 11b), as shown in Fig. 2. This case is favorable in view of efficiency because, by dosing a scale inhibitor having a reducing function according the present invention through a chemical agent injection line 15h, dosage of the scale inhibitor through a chemical agent injection line 15g can be reduced in amount or eliminated. As a representative example of such a process, a patent document WO 2011-021415 may be mentioned.

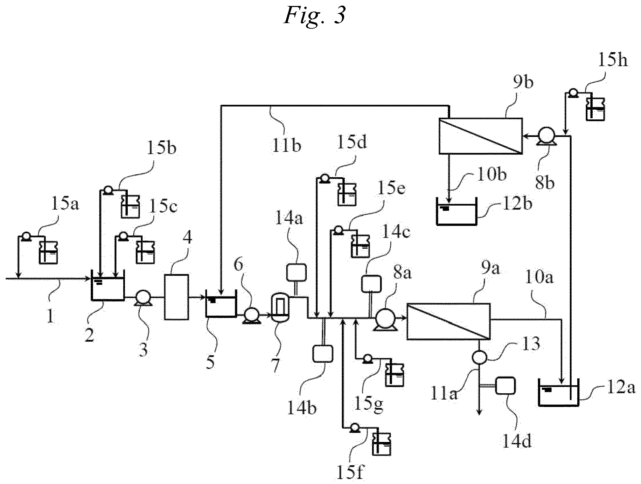

Further, in a permeate two-stage process, as shown in Fig. 3, second-stage concentrate is lower in concentration than raw water in many cases. Accordingly, there are not a few cases where the method of refluxing and mixing the concentrate to raw water is adopted to decrease the concentration of the raw water. At the second stage herein, there are cases where pH is raised for the purpose of enhancing the recovery ratio and the boron removal ratio; as a result, there occur cases where scale tends to generate. Accordingly, there are not a few cases where additional use of a scale inhibitor is made at the second stage. In these cases, the scale inhibitor is mixed into raw water, followed by being fed into a first-stage reverse osmosis membrane. Thus, the use of a scale inhibitor having a reducing function as the second-stage scale inhibitor through the application of the present invention is conducive to oxidation control of the first-stage reverse osmosis membrane.

As an example of such a process, a patent document JP-A-2007-152265 may be mentioned.

As the scale inhibitor having a reducing function which is applicable in the present invention, phosphorous acid-based organic compounds or phosphonic acid-based organic compounds are suitable.

Particularly, it is preferable that the scale inhibitor is an organic acid which includes at least one selected from the group consisting of aminotris(methylenephosphonic acid), diethylenetriamine penta(methylene phosphonic acid), hexaethylenediamine tetra(methylene phosphonic acid), ethylenediamine tetra(methylene phosphonic acid), 1-hydroxyethylene-1,1-diphosphonic acid and tetramethylenediamine tetra(methylene phosphonic acid) or salts thereof, and the scale inhibitor has a molecular weight of 200 g/mole to 10,000 g/mole, more preferably 200 g/mole to 1,000 g/mole. Too low molecular weight of the scale inhibitor is undesirable because there is a risk in which such a scale inhibitor passes through reverse osmosis membranes and leaks into the permeate side, while too high molecular weight of the scale inhibitor is also undesirable because such a scale inhibitor is great in amount to be dosed, and there is a risk in which the scale inhibitor itself becomes a cause of fouling.

Further, it is preferable that the scale inhibitor applicable in the present invention contains, as a auxiliary ingredient, at least one selected from the group consisting of polyphosphoric acid, phosphorous acid, phosphonic acid, phosphorus hydride, phosphine oxide, ascorbic acid, catechol, catechin, polyphenol, gallic acid, and derivatives thereof.

Into the semipermeable membrane separation device according to the present invention, when required, it is possible to intermittently or continuously feed and dose an oxidant for sterilization cleaning within the system through a chemical agent injection line 15a.

While the oxidant herein is not particularly limited, most typical ones include alkali salts of hypochlorous acid and permanganic acid. In addition to these salts, examples of the oxidant include hypochlorous acid, chloric acid, perchloric acid, halogen, chromic acid and alkali salts thereof, chlorine dioxide and hydrogen peroxide.

Likewise, when required, it is possible to dose a pH adjuster and a flocculant necessary for pretreatment through chemical agent injection lines 15b and 15c.

As to the pH adjuster, though there is no particular restriction, sulfuric acid and sodium hydroxide are commonly used.

As to the flocculant, there is no particular restriction, and cationic flocculants, anionic flocculants and mixtures of two or more varieties of flocculants can be used as appropriate. However, with the consideration given to possible leakage of not-yet-flocculated matter into the semipermeable membrane unit, it is preferable to use anionic flocculants having large repulsion to charges possessed generally by the semipermeable membrane. In the case of applying the cationic flocculants, since they have a possibility of being adsorbed onto the semipermeable membrane, it is recommended that they are applied after having an advance checking to verify the absence of problems. Cationic flocculants have positive charges, and so long as they tend to selectively flocculate negatively charged substances, no restrictions are imposed thereon. Accordingly, it is possible to use, for example, inorganic flocculants, which are low-priced and excellent in capability of flocculating fine particles, and organic polymeric flocculants which are, though expensive, high in flocculation force because of having a large number of functional groups. Suitable examples of inorganic flocculants include ferric chloride, ferric (poly)sulfate, aluminum sulfate and aluminum (poly)chloride. In the case of intending to use the treated water for drinking water in particular, there is a possibility that aluminum concentration may become an issue, and hence the use of iron compounds, notably low-priced ferric chloride, is preferred. Examples of representative polymeric flocculants include aniline derivatives, polyethylene imine, polyamine, polyamide and cation-modified polyacrylamide. On the other hand, contrary to cationic flocculants, anionic flocculants have negative charges, and no particular restrictions are imposed thereon so long as they tend to selectively flocculate positively charged substances. And generally used anionic flocculants are organic flocculants such as polymeric flocculants. Specifically, alginic acid and polyacrylamide are representative of natural organic polymers and organic polymeric flocculants, respectively. They are infinitely preferable also in view of their effect.

The oxidant dosed through a chemical agent injection line 15a can be neutralized, for example, by dosing the reductant through a chemical agent injection line 15d. As a result, the line leading from water intake to safety filters via pretreatment can undergo sterilization cleaning.

The reductant usable herein has no particular restrictions, but it is preferable that the reductant includes at least one selected from the group consisting of sodium bisulfite, sodium sulfite, sodium metabisulfite and sodium thiosulfate, which are highly effective to neutralize chloric and permanganic type oxidants described above.

Further, a cleaning agent is fed through a chemical agent injection line 15f into a semipermeable membrane unit 9, whereby the contamination of the semipermeable membrane unit can be prevented. Through a chemical agent injection line 15e, a pH adjuster can be dosed as required. A rise in pH brings about a rise in dissociation degrees of e.g. boric acid and carbonic acid, whereby elimination performance in the semipermeable membrane unit can be enhanced. However, there occur cases where silica scale as well as scale of alkaline earth metals such as calcium, magnesium and barium, becomes likely to generate to result in lowering of the recovery ratio (ratio of the amount of permeate to the amount of raw water) in the semipermeable membrane unit 9 and, also it becomes necessary to increase the amount of the scale inhibitor to be dosed. Accordingly, the pH can be adjusted with reference to the performance requirement and cost efficiency.

By the way, as to the chemical agent injection points in Fig. 1, chemical agents may be injected into lines, or they may be injected into tanks, and there are no particular restrictions. In addition, as the need arises, it is appropriate that stirrers, static mixers or the like are provided.

As materials for semipermeable membranes to which the present invention is applicable, polymeric materials such as cellulose acetate-based polymers, polyamide, polyester, polyimide and vinyl polymers can be used. Moreover, the membrane structure thereof may be either of an asymmetric membrane having a dense layer in at least one surface of the membrane and having micropores, the pore diameter of which gradually becomes larger from the dense layer toward an inner part of the membrane or toward the other surface, or a composite membrane having an exceedingly thin functional layer formed on the dense layer of the asymmetric membrane and made of another material.

Of such membranes, however, composite membranes having a functional layer made from polyamide are preferred since it has high pressure resistance with high water permeability and high solute-removing performance, and further has excellent potential. In order to obtain fresh water from aqueous solutions high in concentration, including seawater in particular, it is necessary to apply pressure higher than osmosis pressure. Thus there are many cases which require application of an operating pressure of at least 5 MPa in particular. For maintaining high water permeability and blocking performance against such an operating pressure, it is appropriate that the membrane have a structure that polyamide is used for its functional layer and the functional layer is held by a support including a porous membrane or a nonwoven fabric. Additionally, as the polyamide semipermeable membrane, a composite semipermeable membrane having on a support a functional layer of crosslinked polyamide obtained by polycondensation reaction between polyfunctional amine and polyfunctional acid halide is appropriate. A separation functional layer is preferably formed from crosslinked polyamide having high chemical stability to acids and alkalis, or from a material containing the crosslinked polyamide as a main component thereof. It is preferable that the crosslinked polyamide is formed by interfacial polycondensation reaction between polyfunctional amine and polyfunctional acid halide, and at least either the polyfunctional amine or the polyfunctional acid halide include a trifunctional or higher compound. Herein, the term polyfunctional amine refers to amine having at least two primary and/or secondary amino groups per one molecule thereof, and examples thereof include aromatic polyfunctional amines such as phenylenediamine and xylylenediamine in which each benzene nucleus has two amino groups situated at any of ortho-, meta- and para-positions, 1,3,5-triaminobenzene, 1,2,4-triaminobenzene, 3,5-diaminobenzoic acid; aliphatic amines such as ethylenediamine and propylenediamine; and alicyclic polyfunctional amines such as 1,2-diaminocyclohexane,1,4-diaminocyclohexane, piperazine, 1,3-bispiperidylpropane and 4-aminomethylpiperazine. Of these amines, aromatic polyfunctional amines are preferred in consideration of selective separation performance, permeability and thermal resistance of the membrane. As such aromatic polyfunctional amines, m-phenylenediamine, p-phenylenediamine and 1,3,5-triaminobenzene are used suitably. Among them, m-phenylenediamine (hereinafter abbreviated as m-PDA) is more suitable because of its ease of availability and handling. These polyfunctional amines may be used alone, or as mixtures of two or more thereof. The term polyfunctional acid halide refers to acid halide having at least two halogenated carbonyl groups per one molecule thereof. Examples of a trifunctional acid halide include trimesic acid chloride, 1,3,5-cyclohexanetricarboxylic acid trichloride and 1,2,4-cyclobutanetricarboxylic acid trichloride, and examples of a bifunctional acid halide include aromatic bifunctional acid halides such as biphenyldicarboxylic acid chloride, biphenylenecarboxylic acid dichloride, azobenzenedicarboxylic acid dichloride, terephtahlic acid chloride, isophthalic acid chloride and naphthalenedicarboxylic acid chloride; aliphatic bifunctional acid halides such as adipoyl chloride and sebacoyl chloride; and alicyclic bifunctional acid halides such as cyclopentanedicarboxylic acid dichloride, cyclohexanedicarboxylic acid dichloride and tetrahydrofurandicarboxylic acid dichloride. In consideration of reactivity to polyfunctional amines, the polyfunctional acid halides are preferably polyfunctional acid chlorides, and in consideration of selective separation performance and thermal resistance, the polyfunctional acid halides are preferably polyfunctional aromatic acid chlorides. Among them, trimesic acid chloride is preferred in view of ease of availability and handling. These polyfunctional acid halides may be used alone or as mixtures of two or more thereof. Methods for making aliphatic acyl groups be present in a separation functional layer have no particular restrictions. For example, aliphatic acyl groups may be made to be present in a separation functional layer through the formation of covalent bonds by bringing a solution of aliphatic acid halide into contact with the surface of a separation functional layer formed by interfacial polycondensation between polyfunctional amine and polyfunctional acid halide, or by making aliphatic acid halide be co-present at the time of interfacial polycondensation between polyfunctional amine and polyfunctional aromatic acid halide.

More specifically, formation of a polyamide separation functional layer on a microporous supporting membrane may be performed in a way that an aqueous solution of polyfunctional amine, an organic solvent solution of polyfunctional acid halide and an organic solvent solution of C₁₋₄ aliphatic acid halide different from the foregoing one are brought into contact with one another on the microporous supporting membrane and subjected to interfacial polycondensation, or in another way that an aqueous solution of polyfunctional amine and an organic solvent solution containing a polyfunctional acid halide and a C₁₋₄ aliphatic acid halide different from the foregoing one are brought into contact with each other on the microporous supporting membrane and subjected to interfacial polycondensation. In these cases, the aliphatic acid halides usable in the present invention have a carbon number generally from 1 to 4, preferably from 2 to 4. With increasing in the carbon number, the aliphatic acid halides suffer a decrease in reactivity because of increased steric hindrance, or they become difficult to approach reaction sites of the polyfunctional acid halide to result in not only inhibition on smooth formation of membrane but also degradation in membrane performance. Examples of such an aliphatic acid halide include methanesulfonyl chloride, acetyl chloride, propionyl chloride, butyryl chloride, oxalyl chloride, malonic acid dichloride, succinic acid dichloride, maleic acid dichloride, fumaric acid dichloride, chlorosulfonylacetyl chloride and N,N-dimethylaminocarbonyl chloride. They may be used alone or as mixtures of two or more thereof, but those having oxalyl chloride as the main ingredient are preferred because they allow formation of balanced membranes which have dense structure and moreover do not suffer much degradation in water permeability. However, polyamide is susceptible to oxidative degradation and liable to be damaged by oxidants such as hypochlorous acid. The application of the present invention therefore has great effect on efficient protection of semipermeable membranes against oxidants.

In addition, as an example of post-treatment for enhancing the ion removal performance of the polyamide semipermeable membrane, short-time chlorine-contact treatment as disclosed in JP-A-2-115027 may be mentioned. There are cases where this treatment is applied in seawater desalination in particular as a method for enhancing the desalination ratio. Such membranes are brought beforehand into contact with oxidants, and they are therefore inferior in durability against the oxidants to membranes having never undergone chlorine-contact treatment during the production of the membranes or before using the membranes for fresh water generation process. Thus it is preferable that more exacting control is given over contact with oxidants, and hence the application of the present invention can develop a significant effect.

The support including a microporous supporting membrane is a layer having substantially no separation performance, and it is provided for the purpose of giving mechanical strength to a separation functional layer of crosslinked polyamide having substantial separation performance. As the support, one which is obtained by forming a microporous supporting membrane on a base material such as fabric or nonwoven fabric may be mentioned.

As to a material for the microporous supporting membrane, there are no particular restrictions, and examples thereof include homopolymers of polysulfone, cellulose acetate, cellulose nitrate, polyvinyl chloride, polyacrylonitrile, polyphenylene sulfide and polyphenylene sulfide sulfone, and copolymers thereof. These homopolymers and copolymers can be used alone or as blends thereof. Among these materials, polysulfone is preferably used because it has high chemical, mechanical and thermal stability and easiness of molding. In addition, the microporous supporting membrane has no particular restrictions as to its structure, and it may have either a structure such that the membrane has micropores uniform in pore diameter throughout its front surface and rear surface, or an asymmetric structure such that the membrane has densely packed micropores at one surface side thereof and the pore diameter thereof is gradually increased from this surface toward the other surface. The size of densely packed micropores is preferably 100 nm or below. Herein, in order that the composite semipermeable membrane fully exerts performance thereof, it is appropriate that the air permeability of a base material thereof is 0.1 cm³/cm²·s or more, preferably 0.4 cm³/cm²·s to 1.5 cm³/cm²·s. Incidentally, the air permeability is measured on the basis of the Frazier method in accordance with JIS L1096-2010. As to usable nonwoven fabric, though it also has no particular restrictions, the use of nonwoven fabric made from a mixture of at least two kinds of polyester fibers whose single fiber fineness is from 0.1 to 0.6 dtex, especially from 0.3 to 2.0 dtex, allows formation of pores having diameters of 10 µm or below among fibers forming the base material, whereby the force for bonding the microporous supporting membrane and the nonwoven fabric can be enhanced. Further, it is preferable that the ratio of pores having diameters of 10 µm or below is 90% or above. The term pore diameter used herein is a value measured on the basis of the bubble point method in accordance with JIS K3832-1990.

Elements used in semipermeable membrane modules to which the present invention is applicable may be made into forms matched appropriately with membrane forms of the semipermeable membranes. The semipermeable membranes for use in the present invention may be either hollow-fiber membranes, tubular membranes, or flat-sheet membranes, and the elements have no particular restrictions so long as they each have liquid chambers on both sides of each semipermeable membrane and allow pressure passage of liquid from one surface to the other surface of the semipermeable membrane. In the case of flat-sheet membranes, the plate-and-frame type with a structure that a plurality of composite semipermeable membranes supported by frames are stacked up and the type referred to as a spiral type are generally used. Such an element is used in a state of being housed in a rectangular or cylindrical case. In the cases of hollow-fiber membranes and tubular membranes, an element is constructed by placing a plurality of semipermeable membranes in a case and subjecting their end portions to potting to form liquid rooms. As liquid separation device, these elements are used alone or in a state that a plurality of elements are connected in series or parallel.

Of the forms of these elements, that of the spiral type is most typical. The element of such a type is an element in a state that a flat-sheet separation membrane together with a feed-side channel member and a permeation-side channel member, and further a film for enhancing pressure resistance, if necessary, is wound around a water collection tube in a spiral fashion. As the feed-side channel member, a material in net form, a material in mesh form, a sheet with grooves or a corrugated sheet can be used. And as the permeation-side channel member also, a material in net form, a material in mesh form, a sheet with grooves or a corrugated sheet can be used. It is all right for both the feed-side channel member and the permeation-side channel member to be either a net or sheet independent of the separation membrane or a net or sheet integrated with the separation membrane through bonding, fusion or the like.

The water collection tube is a tube having a plurality of holes in its periphery, and the material thereof may be either resin or metal, but plastics, such as noryl resin and ABS resin, are generally used in view of cost and durability. As a method for sealing the end portions of a separation membrane, bonding methods are suitably used. Examples of an adhesive usable therein include publicly known adhesives, such as urethane-based adhesives, epoxy-based adhesives and hot-melt adhesives.

As the pretreatment performed before feeding raw water into a semipermeable membrane module in the present invention, removal of suspended matter and organic matter, sterilization and the like may be mentioned. Such pretreatment makes it possible to prevent decrease in performance of the semipermeable membrane from occurring due to clogging and degradation thereof. The specific pretreatment may be chosen as appropriate with reference to properties of raw water. For example, in the case of treating raw water containing suspended matter in high amount, it is appropriate to dose a flocculant such aluminum polychloride into the raw water and then perform sand filtration, and further, for example, perform filtration using a microfiltration membrane or a ultrafiltration membrane which is formed by bundling a plurality of hollow-fiber membranes.

### EXAMPLES

Effects of the invention have been ascertained by using fresh water generation device configured as follows.

To begin with, seawater was taken in using a submersible pump and stored in a raw water tank. Then, two pressurized-type hollow-fiber membrane modules (HFU-2008) manufactured by Toray Industries Inc., in which the membranes were hollow-fiber ultrafiltration membranes made from polyvinylidene fluoride having a cut-off molecular weight of 1.5×10⁵ Da and each having a membrane area of 11.5 m², were used as a pretreatment unit, and the whole quantity of raw water stored was filtrated in a filtration flux of 1.5 m/d through the use of a pressure pump. The thus-pretreated water was stored in an intermediate water tank. A separation membrane unit was provided with a backwash pump for feeding filtrate from a permeate side to a feed side of the membrane and a compressor for feeding air from the bottom of the separation membrane unit to the feed side of the membrane. Continuous filtration was carried out for 30 minutes, then the filtration was once suspended and one-minute physical cleaning in which backwashing using water stored in the intermediate water tank as feed water in a backwash flux of 1.65 m/d and air scrubbing of feeding 14 L/min of air from the bottom of the separation membrane unit were carried out at the same time, was performed, and thereafter the contaminations in the separation membrane unit were discharged out. Then the operation was returned to the normal filtration. And this operation cycle was repeated. While on-line monitoring the oxidation-reduction potential of the pretreated water stored in the intermediate water tank, a scale inhibitor was dosed thereto. The resulting water was passed through a safety filter by a feed pump, and then fed into a semipermeable membrane unit by a booster pump, thereby generating fresh water. The semipermeable membrane unit used herein was one reverse osmosis membrane element manufactured by Toray Industries Inc. (TM810C), and was operated under conditions that the RO feed flow rate was 1.0 m³/h and the permeate flow rate was 0.12 m³/h (recovery ratio: 12%). Incidentally, the operation of the semipermeable membrane unit was continued using filtrate stored in the intermediate tank during the execution of the physical cleaning in the separation membrane unit.

### <Example 1>

The operations were continued for 3 months. Continuous dosage of a commercially available phosphonic acid-based scale inhibitor with a concentration of 1 mg/L was carried out upstream from the semipermeable membrane module. During the operations, the oxidation-reduction potential of pretreated water (obtained after the scale inhibitor was dosed) was kept at 350 mV or lower. And the oxidation-reduction potential of a concentrate of the reverse osmosis membrane was also kept at 350 mV or lower.

After the operations, the reverse osmosis membrane element put to use sustained a 10% reduction in amount of fresh water generated, and the obtained permeate was degraded so that a salt concentration thereof was increased by 1.1 times as compared to permeate obtained at the initial stage. The resulting reverse osmosis membrane element was disassembled, and cleaned with an acid and an alkali; as a result, its performance including an amount of fresh water generated and water quality of permeate, were restored to the equivalents of the initial ones. Further, according to the ESCA analysis made on the membrane surface, no C-Cl bonding was detected, and therefrom it was presumed that there was no oxidative degradation attributed to contact with halogen.

### <Example 2>

The operations were carried out under the same conditions as in Example 1, except that sodium hypochlorite with a concentration of 1 mg/L and copper sulfate with a concentration of 0.1 mg/L were dosed continuously to raw water and sodium bisulfite with a concentration of 3 mg/L was dosed continuously upstream from the intermediate water tank. During the operations, the oxidation-reduction potential of pretreated water was kept at 350 mV or lower. And the oxidation-reduction potential of a concentrate of the reverse osmosis membrane was also kept at 350 mV or lower.

After the operations, the reverse osmosis membrane element put to use sustained a 15% reduction in amount of fresh water generated, and the obtained permeate was degraded so that a salt concentration thereof was increased by 1.2 times as compared to permeate obtained at the initial stage, and further it was suspected that biofouling had generated on the membrane surface. The resulting reverse osmosis membrane element was disassembled, and cleaned with an acid and an alkali; as a result, its performance including an amount of fresh water generated and water quality of permeate, were restored to the equivalents of the initial ones. Thus, it was suggested that periodic cleaning with chemical agents allows performance restoration. Further, according to the ESCA analysis made on the membrane surface, no C-Cl bonding was detected, and therefrom it was presumed that there was no oxidative degradation attributed to contact with halogen.

### <Example 3>

The operations were performed under the same conditions as in Example 2, except that the concentration of sodium bisulfite was changed to 2 mg/L, and therein the oxidation-reduction potential of the pretreated water was kept at 350 mV or lower as was in Example 2. In addition, the oxidation-reduction potential of a concentrate of the reverse osmosis membrane was also kept at 350 mV or lower as was in Example 2.

After the operations, the reverse osmosis membrane element put to use sustained a 5% reduction in amount of fresh water generated, and the obtained permeate was degraded so that a salt concentration thereof was increased by 1.1 times as compared to permeate obtained at the initial stage, and hence it was presumed that biofouling was reduced as compared with that in Example 2. The resulting reverse osmosis membrane element was cleaned with chemical agents, whereby its performance including an amount of fresh water generated and water quality of permeate were restored to the equivalents of the initial ones as was in Example 2, and there was no sign pointing to oxidative degradation in the membrane surface.

### <Example 4>

The operations were performed under the same conditions as in Example 3, except that the phosphonic acid-based scale inhibitor was dosed both before and after the dosage of sodium bisulfite. Results on the membrane performance after the operations, the membrane performance after the cleaning and the sign pointing to oxidative degradation of the membrane were the same as those in Example 3.

### <Example 5>

The operations were performed under the same conditions as in Example 3, except that the phosphonic acid-based scale inhibitor was dosed only after the dosage of sodium bisulfite. During the operations, the oxidation-reduction potential of pretreated water was kept almost at 350 mV or lower, but occasionally, the pretreated water had an oxidation-reduction potential beyond 350 mV, and a concentrate of the reverse osmosis membrane also sometimes had an oxidation-reduction potential beyond 350 mV.

After the operations, the reverse osmosis membrane element put to use sustained a 5% reduction in amount of fresh water generated, and the obtained permeate was degraded so that a salt concentration thereof was increased by 1.1 times as compared to permeate obtained at the initial stage, and further biofouling was reduced. By disassembly of the resulting reverse osmosis membrane element and cleaning with chemical agents, the performance on the amount of fresh water generated was restored to the equivalents of the initial one, but a salt concentration of the permeate remained almost the same, namely almost 1.1 times as high as that in the initial stage. In addition, the ESCA analysis made on the membrane surface showed the presence of C-Cl bonding, and therefrom it was suspected that oxidative degradation was caused by the chlorine-based oxidant.

### <Comparative Example 1>

The operations were carried out under the same conditions as in Example 1, except that no scale inhibitor was dosed. During the operations, the oxidation-reduction potential of pretreated water was kept at 350 mV or lower, but it frequently occurred that a concentrate of the reverse osmosis membrane had an oxidation-reduction potential beyond 350 mV, and therefrom it was suspected that the surface of the reverse osmosis membrane was in an oxidized state.

After the operations, the reverse osmosis membrane element put to use sustained a 10% reduction in amount of fresh water generated, and the obtained permeate was degraded so that a salt concentration was increased by 1.3 times as compared to permeate obtained at the initial stage. By disassembly of the resulting reverse osmosis membrane element and cleaning with an acid and an alkali, the performance on the amount of fresh water generated was restored to the equivalent of the initial one, but a salt concentration of the permeate was restored to only 1.2 times the initial performance. In addition, the ESCA analysis made on the membrane surface showed the presence of C-Cl bonding, and therefrom it was suspected that oxidative degradation was caused by the chlorine-based oxidant.

### <Comparative Example 2>

The operations were carried out under the same conditions as in Example 1, except that the scale inhibitor dosed continuously was changed to a commercially available carboxylic acid-based scale inhibitor. During the operations, the oxidation-reduction potential of pretreated water was kept at 350 mV or lower, but it frequently occurred that a concentrate of the reverse osmosis membrane had an oxidation-reduction potential beyond 350 mV, and therefrom it was suspected that the surface of the reverse osmosis membrane was in an oxidized state.

After the operations, the reverse osmosis membrane element put to use sustained a 12% reduction in amount of fresh water generated, and the obtained permeate was degraded so that a salt concentration was increased by 1.3 times as compared to permeate obtained at the initial stage. By disassembly of the resulting reverse osmosis membrane element and cleaning with an acid and an alkali, the performance on the amount of fresh water generated was restored to the equivalent of the initial one, but a salt concentration of the permeate was restored to only 1.2 times the initial performance. In addition, the ESCA analysis made on the membrane surface showed the presence of C-Cl bonding, and therefrom it was suspected that oxidative degradation was caused by the chlorine-based oxidant.

### <Comparative Example 3>

The operations were carried out under the same conditions as in Example 2, except that no scale inhibitor was dosed. During the operations, the oxidation-reduction potential of pretreated water was kept at 350 mV or lower, but it frequently occurred that a concentrate of the reverse osmosis membrane had an oxidation-reduction potential beyond 350 mV, and therefrom it was suspected that the surface of the reverse osmosis membrane was in an oxidized state.

After the operations, the reverse osmosis membrane element put to use sustained a 20% reduction in amount of fresh water generated, and the obtained permeate was degraded so that a salt concentration was increased by 1.3 times as compared to permeate obtained at the initial stage. By disassembly of the resulting reverse osmosis membrane element and cleaning with an acid and an alkali, the performance on the amount of fresh water generated was restored to the equivalent of the initial one, but a salt concentration of the permeate was restored to only 1.2 times the initial performance. In addition, the ESCA analysis made on the membrane surface showed the presence of C-Cl bonding, and therefrom it was suspected that oxidative degradation was caused by the chlorine-based oxidant.

### <Comparative Example 4>

The operations were carried out under the same conditions as in Example 2, except that the scale inhibitor dosed continuously was changed to a commercially available carboxylic acid-based scale inhibitor. During the operations, the oxidation-reduction potential of pretreated water was kept at 350 mV or lower, but it frequently occurred that a concentrate of the reverse osmosis membrane had an oxidation-reduction potential beyond 350 mV, and therefrom it was suspected that the surface of the reverse osmosis membrane was in an oxidized state.

After the operations, the reverse osmosis membrane element put to use sustained a 20% reduction in amount of fresh water generated, and the obtained permeate was degraded so that a salt concentration was increased by 1.3 times as compared to permeate obtained at the initial stage. By disassembly of the resulting reverse osmosis membrane element and cleaning with an acid and an alkali, the performance on the amount of fresh water generated was restored to the equivalent of the initial one, but a salt concentration of the permeate was restored to only 1.2 times the initial performance. In addition, the ESCA analysis made on the membrane surface showed the presence of C-Cl bonding, and therefrom it was suspected that oxidative degradation was caused by the chlorine-based oxidant.

The conditions for operations and the results in Examples and Comparative Examples are shown in the following table.

**Table 1**

| Dosing Sequence | NaClO | CuSO₄ | Prior Scale Inhibitor | SBS | Posterior Scale Inhibitor | RO Feed Water ORP | RO Concentrate ORP | Water Quality Ratio after Cleaning | Sign Pointing to Oxidative Degradation |
|---|---|---|---|---|---|---|---|---|---|
| Example 1 | absent | absent | phosphonic acid-based | absent | absent | <350 mV | <350 mV | 1.0 times | absent |
| Example 2 | 1 mg/L | 0.1 mg/L | phosphonic acid-based | 3 mg/L | absent | <350 mV | <350 mV | 1.0 times | absent |
| Example 3 | 1 mg/L | 0.1 mg/L | phosphonic acid-based | 2 mg/L | absent | <350 mV | <350 mV | 1.0 times | absent |
| Example 4 | 1 mg/L | 0.1 mg/L | phosphonic acid-based | 2 mg/L | phosphonic acid-based | <350 mV | <350 mV | 1.0 times | absent |
| Example 5 | 1 mg/L | 0.1 mg/L | absent | 2 mg/L | phosphonic acid-based | <350 mV | occasionally over 350 mV | 1.1 times | present |
| Comparative Example 1 | absent | absent | absent | absent | absent | <350 mV | occasionally over 350 mV | 1.2 times | present |
| Comparative Example 2 | absent | absent | carboxylic acid-based | absent | absent | <350 mV | occasionally over 350 mV | 1.2 times | present |
| Comparative Example 3 | 1 mg/L | 0.1 mg/L | absent | 3 mg/L | absent | <350 mV | occasionally over 350 mV | 1.2 times | present |
| Comparative Example 4 | 1 mg/L | 0.1 mg/L | carboxylic acid-based | 3 mg/L | absent | <350 mV | occasionally over 350 mV | 1.2 times | present |

### INDUSTRIAL APPLICABILITY

According to the present invention, it becomes possible to generate fresh water stably and efficiently by maintaining the oxidation-reduction potential of a condensate to a threshold value or lower, while inhibiting scale from generating by intermittently or continuously dosing a scale inhibitor having a reducing function upstream from a semipermeable membrane module.

### DESCRIPTION OF REFERENCE NUMERALS AND SIGNS

1: Raw water line
2 and 2b: Raw water tank
3: Raw water feed pump
4: Pretreatment unit
5 and 5b: Intermediate water tank
6: Pretreated water feed pump
7: Safety filter
8, 8a and 8b: Booster pump
9, 9a and 9b: Semipermeable membrane unit
10, 10a and 10b: Permeate line
11, 11a and 11b: Concentrate line
12, 12a and 12b: Product water tank
13 and 13a: Energy recovery unit
14a to 14d: Oxidation-reduction electrometer or Chlorine concentration meter
15a to 15h: Chemical agent injection line
16: Second raw water line

## Claims

1. A fresh water generation method comprising: feeding raw water or pretreated water thereof as feed water by applying a pressure into a semipermeable membrane module using a booster pump (8, 8a, 8b), thereby separating the feed water into a concentrate and a permeate having a low concentration,
wherein a scale inhibitor having a reducing function is dosed intermittently or continuously upstream of the semipermeable membrane module, thereby inhibiting scale generation and maintaining an oxidation-reduction potential of at least either the feed water or the concentrate to a threshold value or lower,
wherein at least either the feed water of the semipermeable membrane module or the concentrate has the oxidation-reduction potential of 100 mV to 500 mV or a halogen concentration of 0.2 mg/L or lower,
wherein a reductant is dosed after dosing the scale inhibitor and
wherein an oxidant is dosed during water intake or pretreatment, and the reductant is dosed at a location downstream therefrom and also upstream from the semipermeable membrane module.

2. The fresh water generation method according to claim 1, wherein the scale inhibitor is a phosphorous acid-based organic compound or a phosphonic acid-based organic compound.

3. The fresh water generation method according to claim 2, wherein the scale inhibitor is an organic acid which comprises at least one selected from the group consisting of aminotris(methylenephosphonic acid), diethylenetriamine penta(methylene phosphonic acid), hexaethylenediamine tetra(methylene phosphonic acid), ethylenediamine tetra(methylene phosphonic acid), 1-hydroxyethylene-1,1-diphosphonic acid and tetramethylenediamine tetra(methylene phosphonic acid) or salts thereof, and the scale inhibitor has a molecular weight of 200 g/mole to 10,000 g/mole.

4. The fresh water generation method according to claim 2 or 3, wherein the scale inhibitor contains, as an auxiliary ingredient, at least one selected from the group consisting of polyphosphoric acid, phosphorous acid, phosphonic acid, phosphorus hydride, phosphine oxide, ascorbic acid, catechol, catechin, polyphenol, gallic acid, and derivatives thereof.

5. The fresh water generation method according to any one of claims 1 to 4, wherein the raw water or the pretreated water has, at least temporarily, the oxidation-reduction potential of 350 mV or higher.

6. The fresh water generation method according to any one of claims 1 to 5, wherein the raw water or the pretreated water contains transition metals in an amount of 0.001 mg/L or higher.

7. The fresh water generation method according to claim 6, wherein the transition metals include at least one selected from the group consisting of Fe(II/III), Mn(II), Mn(III), Mn(IV), Cu(I/II), Co(II/III), Ni(II) and Cr(II/III/IV/VI).

8. The fresh water generation method according to any one of claims 1 to 7, wherein the oxidation-reduction potential of at least either the feed water or the concentrate is controlled to 350 mV or lower by dosing the scale inhibitor.

9. The fresh water generation method according to any one of claims 1 to 8, wherein a reductant is dosed before dosing the scale inhibitor.

10. The fresh water generation method according to any of claims 1 to 9, wherein the oxidation-reduction potential of the feed water is controlled to a range of 100 mV to 350 mV by dosing the reductant.

11. The fresh water generation method according to any one of claims 1 to 10, wherein the reductant comprises at least one selected from the group consisting of sodium bisulfite, sodium sulfite, sodium metabisulfite and sodium thiosulfate.

12. The fresh water generation method according to any one of claims 1 to 11, wherein a concentrate obtained in another semipermeable membrane module to which a scale inhibitor having a reducing function has been dosed is mixed into the feed water, thereby dosing the scale inhibitor into the feed water.

## Patentansprüche

1. Frischwassererzeugungsverfahren, umfassend: Zuführen von Rohwasser oder vorbehandeltem Wasser davon als Speisewasser durch Ausüben eines Drucks auf ein semipermeables Membranmodul unter Verwendung einer Druckerhöhungspumpe (8, 8a, 8b), wodurch das Speisewasser in ein Konzentrat und ein Permeat mit geringer Konzentration getrennt wird,
wobei ein Ablagerungsinhibitor mit Reduktionsfunktion intermittierend oder kontinuierlich stromaufwärts des semipermeablen Membranmoduls zudosiert wird, wodurch die Erzeugung von Ablagerungen gehemmt wird und ein Oxidations-Reduktionspotential des Speisewassers und/oder des Konzentrats auf einem Schwellenwert oder darunter aufrechterhalten wird,
wobei das Speisewasser des semipermeablen Membranmoduls und/oder das Konzentrat ein Oxidations-Reduktionspotential von 100 mV bis 500 mV oder eine Halogenkonzentration von 0,2 mg/L oder darunter aufweist,
wobei Reduktionsmittel nach der Dosierung des Ablagerungsinhibitors zudosiert wird, und
wobei ein Oxidationsmittel während dem Wasserzulauf oder der Vorbehandlung zudosiert wird, und das Reduktionsmittel an einer Stelle stromabwärts davon und außerdem stromaufwärts des semipermeablen Membranmoduls zudosiert wird.

2. Frischwassererzeugungsverfahren nach Anspruch 1, wobei der Ablagerungsinhibitor eine organische Verbindung auf Phosphorsäurebasis oder eine organische Verbindung auf Phosphonsäurebasis ist.

3. Frischwassererzeugungsverfahren nach Anspruch 2, wobei der Ablagerungsinhibitor eine organische Säure ist, die zumindest eine, ausgewählt aus der Gruppe, bestehend aus Aminotris (methylenphosphonsäure), Diethylentriaminpenta (methylenphosphonsäure), Hexaethylendiamintetra (methylenphosphonsäure) Ethylendiamintetra (methylenphosphonsäure), 1-Hydroxyethylen-1,1-diphosphonsäure und Tetramethylendiamintetra (methylenphosphonsäure) oder Salzen davon, enthält, und der Ablagerungsinhibitor ein Molekulargewicht von 200 g/mol bis 10.000 g/mol aufweist.

4. Frischwassererzeugungsverfahren nach Anspruch 2 oder 3, wobei der Ablagerungsinhibitor als Hilfsbestandteil zumindest eine, ausgewählt aus der Gruppe, bestehend aus Polyphosphorsäure, Phosphorsäure, Phosphonsäure, Phosphorhydrid, Phosphinoxid, Ascorbinsäure enthält. Katechol, Katechin, Polyphenol, Gallussäure und Derivate davon, enthält.

5. Frischwassererzeugungsverfahren nach einem der Ansprüche 1 bis 4, wobei das Rohwasser oder das vorbehandelte Wasser zumindest zeitweise das Oxidations-Reduktionspotential von 350 mV oder darüber aufweist.

6. Frischwassererzeugungsverfahren nach einem der Ansprüche 1 bis 5, wobei das Rohwasser oder das vorbehandelte Wasser Übergangsmetalle in einer Menge von 0,001 mg/L oder darüber enthält.

7. Frischwassererzeugungsverfahren nach Anspruch 6, wobei die Übergangsmetalle zumindest eines, ausgewählt aus der Gruppe, bestehend aus Fe(II/III), Mn(II), Mn (III), Mn(IV), Cu(I/II), Co(II/III), Ni(II) und Cr(II/III/IV/VI), enthalten.

8. Frischwassererzeugungsverfahren nach einem der Ansprüche 1 bis 7, wobei das Oxidations-Reduktionspotential des Speisewassers oder des Konzentrats durch Zudosieren des Ablagerungsinhibitors auf 350 mV oder darunter eingestellt wird.

9. Frischwassererzeugungsverfahren nach einem der Ansprüche 1 bis 8, wobei vor der Dosierung des Ablagerungsinhibitors ein Reduktionsmittel zudosiert wird.

10. Frischwassererzeugungsverfahren nach einem der Ansprüche 1 bis 9, wobei das Oxidations-Reduktionspotential des Speisewassers durch Zudosieren des Reduktionsmittels auf einen Bereich von 100 mV bis 350 mV eingestellt wird.

11. Frischwassererzeugungsverfahren nach einem der Ansprüche 1 bis 10, wobei das Reduktionsmittel zumindest eines, ausgewählt aus der Gruppe, bestehend aus Natriumbisulfit, Natriumsulfit, Natriummetabisulfit und Natriumthiosulfat, aufweist.

12. Frischwassererzeugungsverfahren nach einem der Ansprüche 1 bis 11, wobei ein Konzentrat, das in einem anderen semipermeablen Membranmodul erhalten wird, in den ein Ablagerungsinhibitor mit Reduktionsfunktion dosiert wurde, dem Speisewasser beigemischt wird, wodurch der Ablagerungsinhibitor in das Speisewasser dosiert wird.

## Revendications

1. Procédé de génération d'eau douce comprenant le fait : de fournir de l'eau brute ou de l'eau prétraitée de celle-ci comme eau d'alimentation en appliquant une pression dans un module à membrane semi-perméable en utilisant une pompe de surpression (8, 8a, 8b), séparant ainsi l'eau d'alimentation en un concentré et un perméat ayant une faible concentration,
dans lequel un antitartre ayant une fonction réductrice est dosé de manière intermittente ou continue en amont du module à membrane semi-perméable, inhibant ainsi la génération de tartre et maintenant un potentiel d'oxydoréduction d'au moins soit l'eau d'alimentation, soit le concentré à une valeur inférieure ou égale à une valeur seuil,
dans lequel au moins soit l'eau d'alimentation du module à membrane semi-perméable, soit le concentré a un potentiel d'oxydoréduction compris entre 100 mV et 500 mV ou une concentration d'halogène inférieure ou égale à 0,2 mg/L,
dans lequel un réducteur est dosé après avoir dosé l'antitartre et
dans lequel un oxydant est dosé pendant l'admission ou le prétraitement d'eau, et le réducteur est dosé à un emplacement en aval de celui-ci et également en amont du module à membrane semi-perméable.

2. Procédé de génération d'eau douce selon la revendication 1, dans lequel l'antitartre est un composé organique à base d'acide phosphoreux ou un composé organique à base d'acide phosphonique.

3. Procédé de génération d'eau douce selon la revendication 2, dans lequel l'antitartre est un acide organique qui comprend au moins un élément choisi dans le groupe constitué de l'acide aminotris(méthylènephosphonique), de l'acide diéthylènetriamine penta(méthylènephosphonique), de l'acide hexaéthylènediamine tétra(méthylènephosphonique), de l'acide éthylènediamine tétra(méthylènephosphonique), de l'acide 1-hydroxyéthylène-1,1-diphosphonique et de l'acide tétraméthylènediamine tétra(méthylènephosphonique) ou de sels de ceux-ci, et l'antitartre a un poids moléculaire allant de 200 g/mole à 10000 g/mole.

4. Procédé de génération d'eau douce selon la revendication 2 ou 3, dans lequel l'antitartre contient, comme ingrédient auxiliaire, au moins un élément choisi dans le groupe constitué de l'acide polyphosphorique, de l'acide phosphoreux, de l'acide phosphonique, de l'hydrure de phosphore, de l'oxyde de phosphine, de l'acide ascorbique, du catéchol, de la catéchine, d'un polyphénol, de l'acide gallique et de dérivés de ceux-ci

5. Procédé de génération d'eau douce selon l'une quelconque des revendications 1 à 4, dans lequel l'eau brute ou l'eau prétraitée a, au moins temporairement, un potentiel d'oxydoréduction supérieur ou égal à 350 mV.

6. Procédé de génération d'eau douce selon l'une quelconque des revendications 1 à 5, dans lequel l'eau brute ou l'eau prétraitée contient des métaux de transition en une quantité supérieure ou égale à 0,001 mg/L.

7. Procédé de génération d'eau douce selon la revendication 6, dans lequel les métaux de transition comportent au moins un élément choisi dans le groupe constitué de Fe(II/III), Mn(II), Mn(III), Mn(IV), Cu(I/II), Co(II/III), Ni(II) et Cr(II/III/IV/VI).

8. Procédé de génération d'eau douce selon l'une quelconque des revendications 1 à 7, dans lequel le potentiel d'oxydoréduction d'au moins soit l'eau d'alimentation, soit le concentré est régulé à une valeur inférieure ou égale à 350 mV en dosant l'antitartre.

9. Procédé de génération d'eau douce selon l'une quelconque des revendications 1 à 8, dans lequel un réducteur est dosé avant de doser l'antitartre.

10. Procédé de génération d'eau douce selon l'une des revendications 1 à 9, dans lequel le potentiel d'oxydoréduction de l'eau d'alimentation est régulé dans une plage allant de 100 mV à 350 mV en dosant le réducteur.

11. Procédé de génération d'eau douce selon l'une quelconque des revendications 1 à 10, dans lequel le réducteur comprend au moins un élément choisi dans le groupe constitué du bisulfite de sodium, du sulfite de sodium, du métabisulfite de sodium et du thiosulfate de sodium.

12. Procédé de génération d'eau douce selon l'une quelconque des revendications 1 à 11, dans lequel un concentré obtenu dans un autre module à membrane semi-perméable auquel un antitartre ayant une fonction réductrice a été dosé est mélangé dans l'eau d'alimentation, dosant ainsi l'antitartre dans l'eau d'alimentation.
